# EUROPÄISCHE PATENTANMELDUNG

(11) **EP 4 296 111 A2**
(43) Veröffentlichungstag der Anmeldung: **27.12.2023**
(21) Anmeldenummer: 23180711.6
(22) Anmeldetag: 21.06.2023
(51) Int. Cl.: B60L 53/16

(54) **STECKEREINHEIT FÜR EINEN LADEROBOTER**

(30) Priorität: 24.06.2022 DE 102022206392
(71) Anmelder: Continental Engineering Services GmbH, 60489 Frankfurt (DE)
(72) Erfinder: Borgers, Martin, 60488 Frankfurt am Main (DE); Wilke, Dominik, 60488 Frankfurt am Main (DE); Schirra, Roman, 60488 Frankfurt am Main (DE)
(74) Vertreter: Continental Corporation

(57) **Zusammenfassung**

Steckereinheit, umfassend einen Stecker (1), eine erste Steckerauslenkeinheit (2), welche so ausgebildet ist, dass sie den Stecker in zumindest einer ersten Richtung (z) auslenken kann, wobei
die Steckereinheit eine zweite Steckerauslenkeinheit (3) aufweist, welche den Stecker (1) ebenfalls in der ersten Richtung (z) auslenken kann, zusätzlich und/oder unabhängig von der ersten Steckerauslenkeinheit (2).

## Beschreibung

Die Erfindung betrifft eine Steckereinheit gemäß Oberbegriff von Anspruch 1 sowie die Verwendung der Steckereinheit in einem Laderoboter.

Die Erfindung hat sich die Aufgabe gestellt, eine Steckereinheit vorzuschlagen, insbesondere für einen Laderoboter geeignet, welche ein relativ präzises und/oder relativ störungsfreies und/oder relativ kostengünstig realisierbares und/oder robustes Auslenken des Steckers ermöglicht.

Diese Aufgabe wird erfindungsgemäß gelöst durch die Steckereinheit gemäß Anspruch 1.

Unter einer Steckerauslenkeinheit wird vorzugsweise eine Einheit verstanden, mit welcher der Stecker entlang einer Richtung, insbesondere der ersten Richtung, bewegt bzw. ausgelenkt werden kann, insbesondere so dass er zu einer Steckdose ausgefahren werden kann und in diese Steckdose eingesteckt werden kann. Zweckmäßigerweise erfolgt das Einstecken in die Steckerdose mittels der ersten Steckerauslenkeinheit, wobei die zweite Steckerauslenkeinheit vor dem Einstecken in die Steckdose den Stecker um einen definierten Auslenkungswert ausstellt bzw. ausfährt, so dass der Stecker von dem Rest der Steckereinheit besonders bevorzugt absteht und ein Einstecken in die Steckdose erleichtert wird bzw. nicht durch andere Teile der Steckereinheit, insbesondere bei einer gewissen Schrägstellung zwischen Stecker und Steckdose, behindert wird.

Die erste Steckerauslenkeinheit ist bevorzugt so ausgebildet, dass sie den Stecker zumindest anteilsmäßig in der ersten Richtung auslenken kann. Besonders bevorzugt erfolgt die gesamte Auslenkung des Steckers mittels der ersten Steckerauslenkeinheit. in zwei oder drei Richtungen

Die Steckereinheit weist zweckmäßigerweise zwei Antriebe auf, für jede der beiden Steckerauslenkeinheiten einen separaten Antrieb, wobei diese Antriebe insbesondere jeweils einen Elektromotor aufweisen.

Es ist bevorzugt, dass die zweite Steckerauslenkeinheit so ausgebildet ist, dass die Auslenkung des Steckers um im Wesentlichen zwei Auslenkungswerte und/oder zwei Auslenkpositionen einnehmen kann, zumindest hinsichtlich der Ruhepositionen oder Verfahrzuständen des Steckers bezüglich der zweiten Steckerauslenkeinheit-.

Es ist bevorzugt, dass die erste und zweite Steckerauslenkeinheit der Steckereinheit jeweils einen Antrieb aufweisen und diese Antriebe so ausgelegt sind, dass die erste Steckerauslenkeinheit und die zweite Steckerauslenkeinheit voneinander unabhängig ausgelenkt werden können

Die erste Steckerauslenkeinheit umfasst vorzugsweise einen Scherenhub.

Es ist zweckmäßig, dass die zweite Steckerauslenkeinheit auf dem Scherenhubtisch des Scherenhubs der ersten Steckerauslenkeinheit angeordnet ist. Der Scherenhubtisch bildet insbesondere eine Fläche, welche durch den Scherenhub bewegt bzw. ausgelenkt wird.

Es ist bevorzugt, dass die zweite Steckerauslenkeinheit einen drehbaren und/oder schwenkbaren Auslenkkörper aufweist, welcher den Stecker entlang der ersten Richtung um einen definierten Weg auslenken kann und dass die zweite Steckerauslenkeinheit so ausgebildet ist, dass der Stecker dabei einen unausgelenkten Zustand und nach einer Verfahrauslenkung des Steckers und/oder der zweiten Steckerauslenkeinheit einen ausgelenkten Zustand einnehmen kann, welche in der ersten Richtung eine Auslenkung um den definierten Weg von dem unausgelenkten Zustand beabstandet ist.

Der drehbare Auslenkkörper ist zweckmäßigerweise als Nocke ausgebildet, welche im Wesentlichen in zwei Endpositionen gedreht werden kann und diese Drehung insbesondere mittels eines Elektromotors erfolgt.

Zweckmäßigerweise weist die Steckereinheit für eine Kraftmessung zwischen Stecker und einer Steckdose ein Kraftsensorelement auf, wobei das Kraftsensorelement insbesondere in oder an der zweiten Steckerauslenkeinheit angeordnet ist.

Es ist bevorzugt, dass das Kraftsensorelement als Piezoelement und/oder als Kraftmessdose ausgebildet ist.

Es ist zweckmäßig, dass zur Kraftmessung die Nocke der zweiten Steckerauslenkeinheit in oder an die Kraftmessdose eingreift, wobei auf der der Nocke abgewandten Seite der Kraftmessdose der Stecker angeordnet ist, wobei insbesondere zwischen Nocke und Kraftmessdose ein Zwischenplättchen angeordnet ist. Besonders bevorzugt ist das Zwischenplättchen so ausgebildet und angeordnet, dass es im ausgelenkten Zustand der zweiten Steckerauslenkeinheit die Nocke bzw. den Auslenkkörper fest und insbesondere hinsichtlich des Kraftflusses durchgängig abstützt.

Die Steckereinheit ist vorzugsweise so ausgebildet, dass der Auslenkkörper der zweiten Steckerauslenkeinheit bzw. die Nocke im ausgelenkten und/oder unausgelenkten Zustand die Kraft mit welcher der Stecker eingesteckt wird bzw. einsteckbar ist, aufnimmt.

Unter dem Stecker und insbesondere der Steckdose werden zweckmäßigerweise elektrische Kontaktierungsmittel als Stecker und Steckdose verstanden.

Bevorzugt weist die Steckereinheit ein Gelenk auf, auf dem der Stecker sitzt, wobei dieses Gelenk insbesondere direkt über dem Auslenkkörper bzw. der Nocke angeordnet ist.

Vorzugsweise weist die Steckereinheit eine oder mehrere Federn auf, durch welche der Stecker direkt oder indirekt gelagert und/oder an denen der Stecker direkt oder indirekt aufgehängt ist, wobei diese Federn insbesondere so ausgebildet und angeordnet sind, dass sie Dreh- und/oder Ausgleichsbewegungen des Steckers kompensieren können. Besonders bevorzugt weist die Steckereinheit dabei drei oder vier Federn auf, welche insbesondere symmetrisch angeordnet sind.

Es ist bevorzugt, dass die Federn so ausgebildet und angeordnet sind, dass sie die Auslenkung der zweiten Steckerauslenkeinheit zurückstellen, wenn die Antriebseinheit keine Kraft in Auslenkrichtung bzw. -orientierung auf die Steckerauslenkeinheit ausübt.

Es ist bevorzugt, dass die Positionierung und Lagerung des Steckers mehrere, beispielsweise drei oder vier, Federn umfasst, mittels welchen der Stecker relativ kleine Ausgleichsbewegungen zum Einstecken in eine Steckdose ausführen kann.

Der Stecker ist vorzugsweise auf einer Liftplatte der zweiten Steckerauslenkeinheit direkt oder indirekt angeordnet, welche durch den Auslenkkörper bzw. die Nocke in z-Richtung bzw. erster Richtung bewegt wird. Auf der Liftplatte sind zweckmäßigerweise die Federn angeordnet, von denen der Stecker gelagert wird.

Die Erfindung betrifft außerdem die Verwendung der Steckereinheit in einem Laderoboter sowie einen Laderoboter, umfassend die Steckereinheit.

Unter einem Laderoboter wird vorzugsweise ein Gerät zum elektrischen Laden eines elektrischen Fahrzeugs, insbesondere Kraftfahrzeugs bzw. Personenkraftfahrzeugs oder Lastkraftfahrzeugs, verstanden, wobei der Laderoboter die elektrische Verbindung für einen Ladevorgang zwischen einer Steckereinheit des Laderoboters und einer Steckereinheit des Fahrzeugs herstellt. Dafür ist der Laderoboter zweckmäßigerweise so ausgebildet, dass er seine Steckereinheit gegenüber der Steckereinheit des Fahrzeugs für eine Kontaktierung ausrichten und/oder positionieren kann und besonders bevorzugt die Steckereinheit des Laderoboters mit gegenüber der Steckereinheit des Fahrzeugs in Eingriff gebracht und elektrisch leitend verbunden wird.

Das Fahrzeug weist zweckmäßigerweise einen elektrischen Antrieb mit einer Batterie bzw. einem Akkumulator auf, welche/r insbesondere von dem Laderoboter geladen werden soll.

Der Laderoboter ist bevorzugt als Laderoboter für konduktives Laden ausgebildet

Es zeigen in schematischer Darstellung
Fig.1 ein Ausführungsbeispiel eines Laderoboter mit einer beispielhaften Steckereinheit,
Fig. 2 und 3 ein Ausführungsbeispiel der Steckereinheit hinsichtlich der zweiten Steckerauslenkeinheit, einmal im unausgelenkten Zustand und einem im ausgelenkten Zustand.

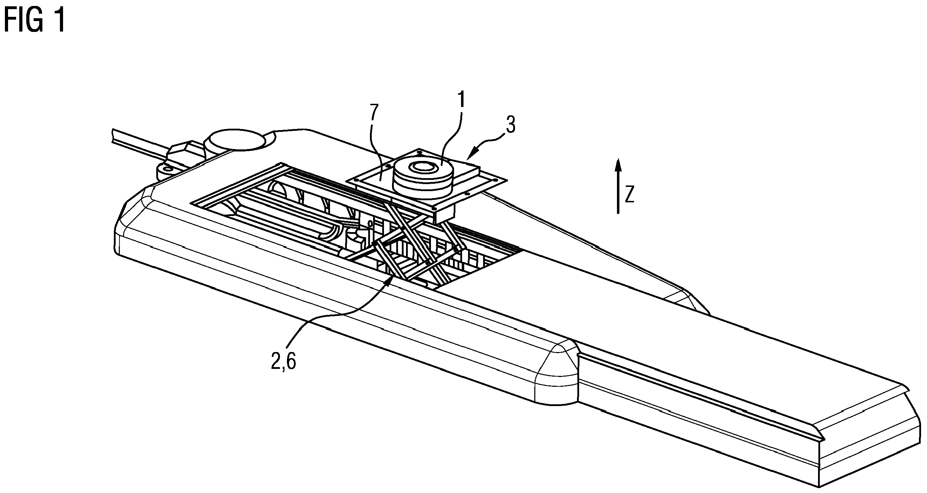

Anhand von Fig. 1 ist eine beispielhafte Steckereinheit in einem beispielhaften Laderobot dargestellt. Die Steckereinheit weist einen Stecker 1 auf, welcher mit zweiter Steckerauslenkeinheit 3 auf dem Scherenhubtisch 7 des Scherenhubs 6 angeordnet ist. Scherenhub 6 ist dabei Teil der ersten Steckerauslenkeinheit 2. Erste und zweite Steckerauslenkeinheit 2, 3 lenken den Stecker jeweils in erster Richtung z aus bzw. verfahren den Stecker in z-Richtung. Jeder der beiden Steckerauslenkeinheiten 2, 3 weist eine nicht dargestellte Antriebseinheit auf, welche beispielgemäß jeweils einen Elektromotor umfasst. Beispielgemäß ist die Steckereinheit so ausgebildet, dass im Zuge einer Auslenkung des Steckers 1, zunächst die zweiter Steckerauslenkeinheit 3 den Stecker um einen definierten Weg auslenkt und dann die erste Steckerauslenkeinheit 2 den Stecker ausfährt und in eine nicht dargestellte Steckdose einstecken kann. Der mögliche Verfahrweg der ersten Steckerauslenkeinheit ist beispielgemäß deutlich größer als der definierte Weg der Auslenkung der zweiten Steckerauslenkeinheit.

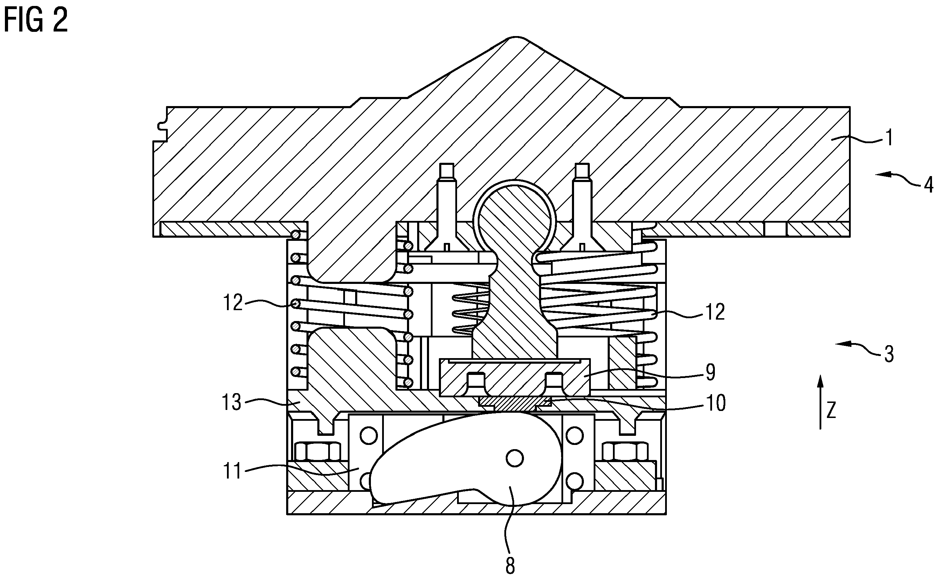

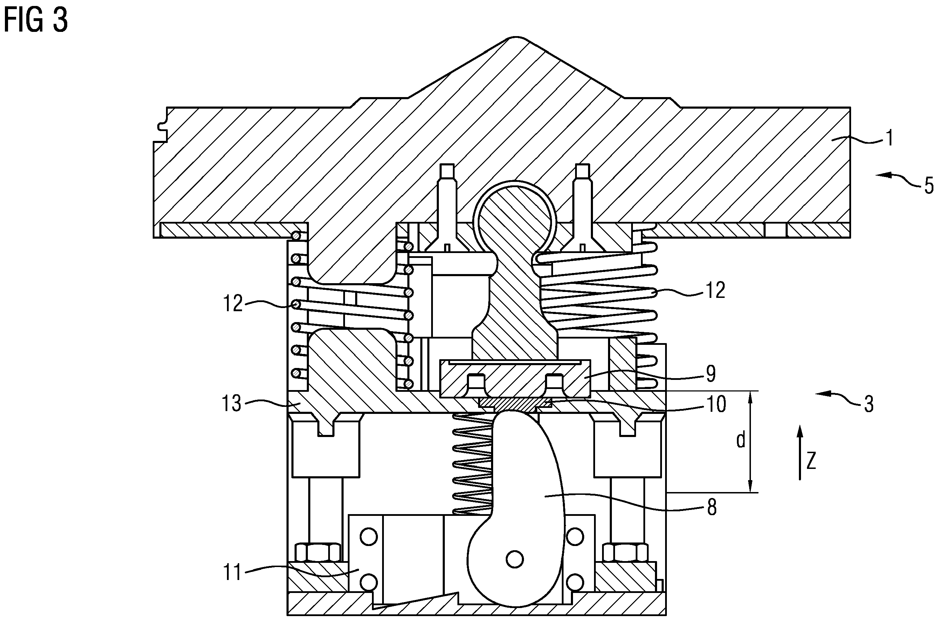

Fig. 2 und 3 zeigen jeweils ein Ausführungsbeispiel der zweiten Steckerauslenkeinheit des Steckers in einem Schnitt von der Seite, wobei in Fig. 2 der Stecker 1 nicht ausgelenkt ist und in Fig. 3 der Stecker 1 um den definierten Weg d in z-Richtung ausgelenkt ist von ein einer ersten Auslenkposition 4 in Fig. 2 zu einer zweiten Auslenkposition 5 in Fig. 3. Der definierte Weg d ist beispielhaft zur besseren Veranschaulichung anhand der Verschiebung/ Auslenkung der Liftplatte veranschaulicht, auf welcher der ersten Stecker 1 angeordnet ist. Die Positionierung und Lagerung des Steckers 1 umfasst dabei mehrere, beispielhaft drei, Federn 12, mittels welchen Stecker 1 relativ kleine Ausgleichsbewegungen zum Einstecken in eine nicht dargestellte Steckdose ausführen kann. Die Liftplatte 13 wird von Auslenkörper 8, beispielhaft als drehbare Nocke ausgebildet in z-Richtung bewegt und nimmt bevorzugt zwei Auslenkpositionen 4 und 5 ein, wobei der definierte Weg d dazwischen auch der Auslenkung des Steckers entspricht, weil der Stecker auf der Liftplatte angeordnet ist. Die zweite Steckerauslenkeinheit 3 weist außerdem ein Kraftsensorelement 9 auf, welches beispielhaft als Kraftmessdose ausgebildet ist und im Kraftfluss zwischen der Nocke 8 und dem Stecker 1 angeordnet ist. Dabei ist zwischen Nocke 8 und Kraftmessdose 9 ein Zwischenplättchen 10 angeordnet, welches die Krafteinwirkung der Nocke 8 auf die Kraftmessdose 9 überträgt.

### Bezugszeichen

- 1: Stecker
- 2: erste Steckerauslenkeinheit
- 3: zweite Steckerauslenkeinheit
- 4: erste Auslenkposition
- 5: zweite Auslenkposition
- 6: Scherenhub
- 7: Scherenhubtisch
- 8: Auslenkkörper bzw. Nocke
- 9: Kraftsensorelement bzw. Kraftmessdose
- 10: Zwischenplättchen
- 11: Elektromotor bzw. Servomotor der zweiten Steckerauslenkeinheit
- 12: Federn
- 13: Liftplatte
- z: erste Richtung
- d: definierter Weg der Auslenkung der zweiten Steckerauslenkeinheit

## Patentansprüche

1. Steckereinheit, umfassend einen Stecker (1), eine erste Steckerauslenkeinheit (2), welche so ausgebildet ist, dass sie den Stecker in zumindest einer ersten Richtung (z) auslenken kann, **dadurch gekennzeichnet, dass** die Steckereinheit eine zweite Steckerauslenkeinheit (3) aufweist, welche den Stecker (1) ebenfalls in der ersten Richtung (z) auslenken kann, zusätzlich und/oder unabhängig von der ersten Steckerauslenkeinheit (2).

2. Steckereinheit nach Anspruch 1, **dadurch gekennzeichnet, dass** die zweite Steckerauslenkeinheit (3) so ausgebildet ist, dass die Auslenkung des Steckers (1) um im Wesentlichen zwei Auslenkungswerte und/oder zwei Auslenkpositionen (4, 5) einnehmen kann, zumindest hinsichtlich der Ruhepositionen oder Verfahrzuständen des Steckers (1) bezüglich der zweiten Steckerauslenkeinheit (3)-.

3. Steckereinheit nach mindestens einem der vorhergehenden Ansprüche, **dadurch gekennzeichnet, dass** die erste und zweite Steckerauslenkeinheit (2, 3) der Steckereinheit jeweils einen Antrieb (11) aufweisen und diese Antriebe so ausgelegt sind, dass die erste Steckerauslenkeinheit (2) und die zweite Steckerauslenkeinheit (3) voneinander unabhängig ausgelenkt werden können

4. Steckereinheit nach mindestens einem der vorhergehenden Ansprüche, **dadurch gekennzeichnet, dass**
die erste Steckerauslenkeinheit (2) einen Scherenhub (6) umfasst.

5. Steckereinheit nach mindestens einem der vorhergehenden Ansprüche, **dadurch gekennzeichnet, dass** die zweite Steckerauslenkeinheit (3) auf dem Scherenhubtisch (7) des Scherenhubs (6) der ersten Steckerauslenkeinheit (2) angeordnet ist.

6. Steckereinheit nach mindestens einem der vorhergehenden Ansprüche, **dadurch gekennzeichnet, dass** die zweite Steckerauslenkeinheit (3) einen drehbaren und/oder schwenkbaren Auslenkkörper (8) aufweist, welcher den Stecker (1) entlang der ersten Richtung (z) um einen definierten Weg (d) auslenken kann und dass die zweite Steckerauslenkeinheit (3) so ausgebildet ist, dass der Stecker (1) dabei einen unausgelenkten Zustand (4) und nach einer Verfahrauslenkung des Steckers und/oder der zweiten Steckerauslenkeinheit einen ausgelenkten Zustand (5) einnehmen kann, welche in der ersten Richtung (z) eine Auslenkung um den definierten Weg (d) von dem unausgelenkten Zustand beabstandet ist.

7. Steckereinheit nach mindestens einem der vorhergehenden Ansprüche, **dadurch gekennzeichnet, dass** der drehbare Auslenkkörper (8) als Nocke ausgebildet ist, welche im Wesentlichen in zwei Endpositionen gedreht werden kann und diese Drehung insbesondere mittels eines Elektromotors (11) erfolgt.

8. Steckereinheit nach mindestens einem der vorhergehenden Ansprüche, **dadurch gekennzeichnet, dass** die Steckereinheit für eine Kraftmessung zwischen Stecker und einer Steckdose ein Kraftsensorelement (9) aufweist, wobei das Kraftsensorelement (9) insbesondere in oder an der zweiten Steckerauslenkeinheit (3) angeordnet ist.

9. Steckereinheit nach Anspruch 8, **dadurch gekennzeichnet, dass** das Kraftsensorelement (9) als Piezoelement und/oder als Kraftmessdose ausgebildet ist.

10. Steckereinheit nach Anspruch 8 oder 9, **dadurch gekennzeichnet, dass** zur Kraftmessung die Nocke (8) der zweiten Steckerauslenkeinheit (3) in oder an die Kraftmessdose (9) eingreift, wobei auf der der Nocke abgewandten Seite der Kraftmessdose der Stecker (1) angeordnet ist, wobei insbesondere zwischen Nocke und Kraftmessdose ein Zwischenplättchen (10) angeordnet ist.

11. Verwendung der Steckereinheit nach mindestens einem der Ansprüche 1 bis 10 in einem Laderoboter.
